# EUROPEAN PATENT APPLICATION

(11) **EP 4 794 240 A1**
(43) Date of publication of application: **19.08.2026**
(21) Application number: 24884687.5
(22) Date of filing: 28.10.2024
(51) Int. Cl.: H04L 5/00

(54) **PILOT TRANSMISSION METHOD AND APPARATUS**

(30) Priority: 03.11.2023 CN 202311458689
(71) Applicant: HUAWEI TECHNOLOGIES CO., LTD., Shenzhen, Guangdong 518129 (CN)
(72) Inventor: MA, Qianli, Shenzhen, Guangdong 518129 (CN); HUANG, Huang, Shenzhen, Guangdong 518129 (CN)
(74) Representative: Gill Jennings & Every LLP
(86) International application number: PCT/CN2024/127905
(87) International publication number: WO 2025/092684

(57) **Abstract**

This application discloses a pilot transmission method and apparatus. The method includes: determining a first length; determining a first sequence pair based on the first length, where the first sequence pair includes at least two sequences, and a length of each of the at least two sequences is the first length; generating at least two pilot symbols based on the first sequence pair; and outputting the at least two pilot symbols. In this solution, during generation of pilot symbols, a length of a sequence used to generate pilot symbols is considered, so that pilot symbols can be generated based on a sequence of an appropriate length (namely, the first length), thereby achieving a technical effect of balancing overheads and effectiveness of channel estimation.

## Description

### CROSS-REFERENCE TO RELATED APPLICATIONS

This application claims priority to Chinese Patent Application No. 202311458689.8, filed with the China National Intellectual Property Administration on November 3, 2023 and entitled "PILOT TRANSMISSION METHOD AND APPARATUS", which is incorporated herein by reference in its entirety.

### TECHNICAL FIELD

This application relates to the field of communication technologies, and in particular, to a pilot transmission method and apparatus.

### BACKGROUND

A pilot signal generated based on a Gold (Gold) sequence is characterized by a low peak to average power ratio (peak to average power ratio, PAPR) but has poor frequency domain flatness, that is, there are signals with low signal energy on some subcarriers. When a receiving end performs channel estimation, signal-to-noise ratios of these subcarriers are very low, and channel estimation quality is poor. A pilot signal generated based on a zadoff-chu (zadoff-chu, ZC) sequence has good frequency domain flatness but has a high PAPR. After being amplified by a power amplifier, the pilot signal may be distorted, and consequently, a receiving end cannot correctly parse the pilot signal.

A pilot signal generated based on a Golay complementary sequence pair may balance a low PAPR and frequency domain flatness. However, lengths of Golay complementary sequences (Golay complementary sequences, GCS) are limited for selection. If a selected sequence is excessively long, a generated pilot signal occupies a large quantity of channels that do not need to be estimated, and overheads of channel estimation are increased. If a selected sequence is excessively short, all channels that need to be estimated cannot be effectively estimated, resulting in inaccurate channel estimation.

Therefore, how to select a Golay complementary sequence pair of an appropriate length to generate a pilot signal while balancing overheads and effectiveness of channel estimation is a technical problem that needs to be urgently resolved.

### SUMMARY

This application provides a pilot transmission method and apparatus, so that a pilot signal can be generated based on a sequence of an appropriate length, thereby achieving a technical effect of balancing overheads and effectiveness of channel estimation.

According to a first aspect, a pilot transmission method is provided. The method may be performed by a first communication device. Unless otherwise specified, the "first communication device" in this application may be the first communication device (for example, a network device or a terminal device), or may be a component (for example, a processor, a chip, or a chip system) in the first communication device, or may be a logical module or software that can implement all or some functions of the first communication device. The method includes: determining a first length; determining a first sequence pair based on the first length, where the first sequence pair includes at least two sequences, and a length of each of the at least two sequences is the first length; generating at least two pilot symbols based on the first sequence pair; and outputting the at least two pilot symbols.

In the foregoing solution, during generation of pilot symbols, a length of a sequence used to generate pilot symbols is considered, so that pilot symbols can be generated based on a sequence of an appropriate length (namely, the first length), and bandwidths occupied by finally generated pilot symbols match (for example, are consistent with) a bandwidth of a channel that needs to be estimated (for example, a transmission bandwidth of a first data symbol), thereby ensuring that a receiving end of pilot symbols can effectively estimate all channels that need to be estimated without incurring additional overheads of channel estimation, that is, balancing overheads and effectiveness of channel estimation.

In a possible design, the first sequence pair is a Golay complementary sequence pair.

In a possible design, a Golay complementary sequence is a binary Golay complementary sequence.

Compared with a quaternary Golay complementary sequence or a polyphase Golay complementary sequence, the binary Golay complementary sequence enables a PAPR of a pilot signal to be lower.

In a possible design, first information may be received from a network device, where the first information indicates the first length; and the first length may be determined based on the first information.

In this manner, complexity of determining the first length can be reduced.

In a possible design, the first information includes a factor set, and the factor set includes at least one of a first factor, a second factor, and/or a third factor. Correspondingly, determining the first length based on the first information may include: determining the first length based on the factor set.

In this manner, a data amount of the first information can be reduced, thereby reducing resource overheads.

In a possible design, the first factor, the second factor, the third factor, and the first length satisfy the following relationship: $N = {2}^{a} {10}^{b} {26}^{c} ,$ where N is the first length, a is the first factor, b is the second factor, c is the third factor, and a, b, and c are natural numbers.

Certainly, the foregoing relationship is merely an example, and is not limited thereto in practice. For example, the foregoing relationship may alternatively be N = 2^{a}10^{b}, or the like, and a bandwidth scheduling level of a 5G system may be considered.

In a possible design, the first length is related to a transmission bandwidth of a first data symbol, and the first data symbol and the at least two pilot symbols are mapped to a same frequency domain resource. In other words, the first length may be determined based on the transmission bandwidth of the first data symbol.

In a possible design, a length corresponding to the transmission bandwidth of the first data symbol and a first parameter may be determined based on a correspondence between a transmission bandwidth, a parameter, and a length of a data symbol, and the determined length may be used as the first length, where the parameter includes a roll-off factor and/or bandwidth extension, and the first parameter includes a roll-off factor and/or a bandwidth extension factor used to generate the first data symbol.

In this manner, the network device does not need to indicate the first length, so that resource overheads can be reduced, and an implementation is simple.

In a possible design, the first length may be determined based on the transmission bandwidth of the first data symbol and a first parameter, where the first parameter includes a roll-off factor and/or a bandwidth extension factor used to generate the first data symbol.

In this manner, the network device does not need to indicate the first length, so that resource overheads can be reduced.

In a possible design, determining the first length based on the transmission bandwidth of the first data symbol and the first parameter may include: determining the first length based on the transmission bandwidth of the first data symbol, the roll-off factor used to generate the first data symbol, a first coefficient afa, and a second coefficient; or determining the first length based on the transmission bandwidth of the first data symbol, the bandwidth extension factor used to generate the first data symbol, a first coefficient afa, and a second coefficient. The second coefficient is 2*^{a}*10*^{b}*26*^{c}*, and a, b, and *c* are natural numbers.

In a possible design, the first length is N, and the transmission bandwidth of the first data symbol is M; and
N is equal to 2^{a}10^{b}26^{c}, N is a maximum integer less than or equal to M, and a, b, and c are natural numbers; or
N is equal to 2^{a}10^{b}, N is a maximum integer less than or equal to M, and a and b are natural numbers; or
N is equal to 2^{a}, N is a maximum integer less than or equal to M, and a is a natural number.

In this way, it can be ensured that the first length is as close as possible to the transmission bandwidth while meeting a length requirement of a Golay complementary sequence pair.

In a possible design, if N is less than M, each sequence in the first sequence pair is extended to a same length as the transmission bandwidth to obtain an extended first sequence pair; and the at least two pilot symbols are generated based on the extended first sequence pair.

For example, a discrete fourier transform (discrete fourier transformation, DFT) is performed on any sequence in the first sequence pair; and the any sequence obtained after DFT is cyclically extended to extend a length of the any sequence obtained after DFT from N to M.

For example, before a DFT is performed on any sequence in the first sequence pair, the any sequence is padded with zeros to extend a length of the any sequence from N to M, where a quantity of padded zeros is M-N. Padding the any sequence with zeros includes one or more of the following: padding zeros at a head of the any sequence; padding zeros at a tail of the any sequence; and padding zeros at equal intervals between elements in the any sequence. Certainly, the foregoing several padding manners are merely examples, and are not limited thereto in practice.

In this design manner, each sequence in the first sequence pair can be extended to the same length as the transmission bandwidth, thereby ensuring that finally generated pilot symbols can be used to effectively estimate all channels on which the first data symbol is located.

In a possible design, the first length is N, and the transmission bandwidth of the first data symbol is M; and
N is equal to 2^{a}10^{b}26^{c}, N is a minimum integer greater than or equal to M, and a, b, and c are natural numbers; or
N is equal to 2^{a}10^{b}, N is a minimum integer greater than or equal to M, and a and b are natural numbers; or
N is equal to 2^{a}, N is a minimum integer greater than or equal to M, and a is a natural number.

In this way, it can be ensured that the first length is as close as possible to the transmission bandwidth while meeting a length requirement of a Golay complementary sequence pair.

In a possible design, if N is greater than M, each sequence in the first sequence pair is truncated to obtain a truncated first sequence pair; and the at least two pilot symbols are generated based on the truncated first sequence pair.

In this design manner, each sequence in the first sequence pair can be truncated to the same length as the transmission bandwidth, thereby ensuring that finally generated pilot symbols can be used to effectively estimate all channels on which the first data symbol is located.

In a possible design, a same filter is used to generate the pilot symbols in the at least two pilot symbols, and/or a same bandwidth extension factor is used to generate the pilot symbols in the at least two pilot symbols.

In this way, it can be implemented that pilot symbols with complementary properties use same spectrum spreading, so that the pilot symbols with complementary properties can be generated or processed based on a same filter, and support is provided for the receiving end to jointly process the pilot symbols with complementary properties.

In a possible design, the at least two pilot symbols are located within a time domain window (time domain windows, TDW); and a same filter is used to generate a plurality of pilot symbols within the TDW, and/or a same bandwidth extension factor is used to generate a plurality of pilot symbols within the TDW.

In this way, the pilot symbols within a TDW can be generated or processed based on a same filter, and support is provided for the receiving end to jointly process the pilot symbols within a TDW.

In a possible design, a filter used to generate the pilot symbols is the same as a filter used to generate the first data symbol; and/or a bandwidth extension factor used to generate the pilot symbols is the same as the bandwidth extension factor used to generate the first data symbol.

In this way, pilot symbols and data symbols may be generated or processed based on a same filter, and transparent transmission is enabled without distinguishing between pilot symbols and data symbols, thereby reducing complexity of signal processing.

According to a second aspect, a pilot transmission method is provided. The method may be performed by a second communication device. Unless otherwise specified, the "second communication device" in this application may be the second communication device (for example, a terminal device or a network device), or may be a component (for example, a processor, a chip, or a chip system) in the second communication device, or may be a logical module or software that can implement all or some functions of the second communication device. The method includes: obtaining a to-be-decoded signal, where the to-be-decoded signal includes at least two pilot symbols, the at least two pilot symbols are generated based on a first sequence pair, the first sequence pair includes at least two sequences, and a length of each of the at least two sequences is a first length; and performing channel estimation on the at least two pilot symbols.

In the foregoing solution, pilot symbols received by the second communication device are generated based on the first sequence pair. Therefore, channels on which a data symbol is located can all be effectively estimated without incurring additional overheads of channel estimation, thereby balancing overheads and effectiveness of channel estimation.

In a possible design, performing joint channel estimation on the at least two pilot symbols may be performing joint channel estimation on the at least two pilot symbols or jointly processing the at least two pilot symbols.

In a possible design, the first sequence pair is a Golay complementary sequence pair.

In a possible design, the first sequence pair is a binary Golay complementary sequence pair.

In a possible design, if the second communication device is a network device, the second communication device may further send first information, where the first information indicates the first length.

In this way, a receiving end (for example, a first communication device) of the first information can directly determine the first length based on the first information, thereby reducing complexity of determining the first length by the first communication device.

In a possible design, the first information includes a factor set, and the factor set includes at least one of a first factor, a second factor, and/or a third factor.

In a possible design, the first factor, the second factor, the third factor, and the first length satisfy the following relationship: $N = {2}^{a} {10}^{b} {26}^{c} ,$ where N is the first length, a is the first factor, b is the second factor, c is the third factor, and a, b, and c are natural numbers.

In a possible design, the first length is related to a transmission bandwidth of a first data symbol, and the first data symbol and the at least two pilot symbols are mapped to a same frequency domain resource.

In a possible design, a length corresponding to the transmission bandwidth of the first data symbol and a first parameter may be determined based on a correspondence between a transmission bandwidth, a parameter, and a length of a data symbol, and the determined length may be used as the first length, where the parameter includes a roll-off factor and/or bandwidth extension, and the first parameter includes a roll-off factor and/or a bandwidth extension factor used to generate the first data symbol.

In a possible design, the first length may be determined based on the transmission bandwidth of the first data symbol and a first parameter, where the first parameter includes a roll-off factor and/or a bandwidth extension factor used to generate the first data symbol.

In a possible design, determining the first length based on the transmission bandwidth of the first data symbol and the first parameter may include:
determining the first length based on the transmission bandwidth of the first data symbol, the roll-off factor used to generate the first data symbol, a first coefficient afa, and a second coefficient, where the second coefficient is 2^{a}10^{b}26^{c}, and a, b, and c are natural numbers; or
determining the first length based on the transmission bandwidth of the first data symbol, the bandwidth extension factor used to generate the first data symbol, a first coefficient afa, and a second coefficient, where the second coefficient is 2^{a}10^{b}26^{c}, and a, b, and c are natural numbers.

In a possible design, the first length is N, and the transmission bandwidth of the first data symbol is M; and
N is equal to 2^{a}10^{b}26^{c}, N is a maximum integer less than or equal to M, and a, b, and c are natural numbers; or
N is equal to 2^{a}10^{b}, N is a maximum integer less than or equal to M, and a and b are natural numbers; or
N is equal to 2^{a}, N is a maximum integer less than or equal to M, and a is a natural number.

In a possible design, the first length is N, and the transmission bandwidth of the first data symbol is M; and
N is equal to 2^{a}10^{b}26^{c}, N is a minimum integer greater than or equal to M, and a, b, and c are natural numbers; or
N is equal to 2^{a}10^{b}, N is a minimum integer greater than or equal to M, and a and b are natural numbers; or
N is equal to 2^{a}, N is a minimum integer greater than or equal to M, and a is a natural number.

For beneficial effects of the foregoing several design manners, refer to beneficial effects of corresponding designs in the first aspect. Details are not described herein again.

According to a third aspect, a communication apparatus is provided. The apparatus includes a module, a unit, or a technical means configured to perform the method according to any one of the first aspect or the possible designs of the first aspect.

For example, the apparatus may include:
a processing module, configured to: determine a first length; determine a first sequence pair based on the first length, where the first sequence pair includes at least two sequences, and a length of each of the at least two sequences is the first length; and generate at least two pilot symbols based on the first sequence pair; and
a transceiver module, configured to output the at least two pilot symbols.

According to a fourth aspect, a communication apparatus is provided. The apparatus includes a module, a unit, or a technical means configured to perform the method according to any one of the second aspect or the possible designs of the second aspect.

For example, the apparatus may include:
a transceiver module, configured to obtain a to-be-decoded signal, where the to-be-decoded signal includes at least two pilot symbols, the at least two pilot symbols are generated based on a first sequence pair, the first sequence pair includes at least two sequences, and a length of each of the at least two sequences is a first length; and
a processing module, configured to perform channel estimation on the at least two pilot symbols.

According to a fifth aspect, a communication apparatus is provided. The apparatus includes a processor and an interface circuit, the interface circuit is electrically coupled to the processor, and the processor performs, using a logic circuit or by executing code instructions, the method according to any one of the first aspect or the possible designs of the first aspect or the method according to any one of the second aspect or the possible designs of the second aspect.

According to a sixth aspect, a computer-readable storage medium is provided. The storage medium stores a computer program or instructions, and when the computer program or the instructions are run, the method according to any one of the first aspect or the possible designs of the first aspect is performed or the method according to any one of the second aspect or the possible designs of the second aspect is performed.

According to a seventh aspect, a computer program product is provided, including instructions. When the instructions are run on a computer, the method according to any one of the first aspect or the possible designs of the first aspect is performed or the method according to any one of the second aspect or the possible designs of the second aspect is performed.

For specific designs and beneficial effects of the third aspect to the seventh aspect, refer to corresponding designs and beneficial effects of the first aspect and the second aspect.

### BRIEF DESCRIPTION OF DRAWINGS

FIG. 1 is a flowchart of processing a DFT-s-OFDM signal;
FIG. 2 is a diagram of a communication system to which an embodiment of this application is applicable;
FIG. 3 is a flowchart of a pilot transmission method according to an embodiment of this application;
FIG. 4 is an example diagram of frequency domain cyclic extension;
FIG. 5 is a flowchart of another pilot transmission method according to an embodiment of this application;
FIG. 6 is a diagram of (joint) channel estimation;
FIG. 7 is a diagram of a structure of a communication apparatus according to an embodiment of this application; and
FIG. 8 is a diagram of a structure of another communication apparatus according to an embodiment of this application.

### DESCRIPTION OF EMBODIMENTS

For ease of understanding of technical solutions provided in embodiments of this application, the following first explains and describes some technical terms used in embodiments of this application.

### (1) Single-carrier and multi-carrier:

Single-carrier refers to convolving serially arranged transmit signals with a roll-off filter to form a transmit signal. Multi-carrier refers to arranging transmit signals in parallel and forming a transmit signal by performing an inverse fast fourier transform (inverse fast fourier transform, IFFT).

For example, a single-carrier waveform may be a single-carrier-quadrature amplitude modulation (single carrier-quadrature amplitude modulation, SC-QAM) waveform, and a multi-carrier waveform may be an orthogonal frequency division multiplexing (orthogonal frequency division multiplexing, OFDM) waveform. In addition, a discrete fourier transform-spread-orthogonal frequency division multiplexing (discrete fourier transformation-spread-orthogonal frequency division multiplexing, DFT-s-OFDM) waveform is almost equivalent to a conventional single-carrier waveform. However, the DFT-s-OFDM waveform uses a multi-carrier implementation, and therefore is easy to be compatible with OFDM, but is still a single-carrier waveform in essence.

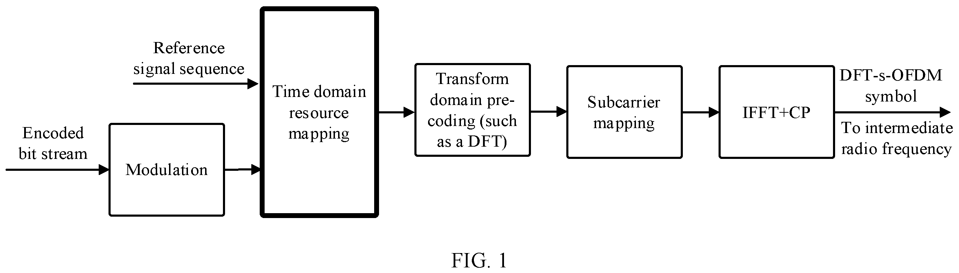

FIG. 1 is a flowchart of signal processing of a transmitter of a network device or a terminal device when the network device and the terminal device communicate with each other using a DFT-s-OFDM waveform.

As shown in FIG. 1, the transmitter modulates an encoded bit stream to obtain a modulated data sequence. The transmitter performs time domain resource mapping on a reference signal sequence and a modulated sequence (that is, determining a time domain resource for each sequence, for example, determining an OFDM symbol carrying each sequence). The reference signal sequence is, for example, at least one of a de-modulation reference signal (De-modulation Reference Signal, DMRS) sequence, a phase tracking reference signal (phase tracking reference signal, PTRS) sequence, a tracking reference signal (tracking reference signal, TRS) sequence, or a channel state information-reference signal (channel state information-reference signal, CSI-RS) sequence; transform domain coding (for example, a discrete fourier transform (discrete fourier transformation, DFT) operation) is performed on the sequence obtained after the time domain resource mapping to transform the sequence to frequency domain; subcarrier mapping (for example, mapping to a resource element (resource element, RE)) is performed on the sequence obtained after DFT; and an IFFT is performed on the sequence obtained after the subcarrier mapping, and a cyclic prefix (cyclic prefix, CP) is superimposed to obtain a DFT-s-OFDM sequence.

A receiver performs a process opposite to that performed by the transmitter. For example, after obtaining the DFT-s-OFDM sequence, the receiver removes the superimposed CP from the sequence, and performs operations such as a DFT, subcarrier demapping, and an IDFT, to restore the reference signal sequence, the encoded bit stream, and the like.

It may be understood that the related operations in FIG. 1 are merely used as an example. Optionally, other possible operations, for example, at least one of frequency domain spectrum shaping, serial-to-parallel conversion, parallel-to-serial conversion, a digital-to-analog converter (digital-to-analog converter, DAC), a power amplifier (power amplifier, PA), a low noise amplifier (low noise amplifier, LNA), and an analog-to-digital converter (analog-to-digital converter, ADC), may be further included.

### (2) PAPR:

A wireless signal, observed in time domain, is a sine wave with a changing amplitude, and the amplitude is not constant. An amplitude peak of the signal in one cycle is different from that in another cycles. Therefore, average powers and peak powers in all cycles are different. The peak power is a highest transient power that occurs with a probability over a long period of time, and the probability is usually 0.01% (namely, 10^-4). A ratio of the peak power under the probability to a total average power of a system is the PAPR.

### (3) Golay complementary sequence pair:

For two sequences a = (a₀, a₁, a₂, ... , aₙ₋₁) and b = (b₀, b₁, b₂, ... , bₙ₋₁) whose lengths are n, it is assumed that: ${G}_{a} \left(j\right) = {\sum }_{k = 0}^{n - 1 - j} {a}_{k} {a}_{k + j} .$

If the sequence a and the sequence b meet the following requirements, the sequence a and the sequence b form one Golay complementary sequence pair (or form a pair of Golay complementary sequences), a is a Golay complementary sequence, and b is a Golay complementary sequence:
For any 0 < j < n - 1, Gₐ(j) + G_{b}(j) = 0, and when j = 0, Gₐ(j) + G_{b}(j) = 2n.

In other words, in one Golay complementary sequence pair, when j is not 0, a sum of autocorrelations of two sequences is 0, and when j is 0, the sum of the autocorrelations of the two sequences is 2n.

It may be understood that, for the sequence a, in addition to the sequence b, another sequence and the sequence a may meet the foregoing requirement. For the sequence b , in addition to the sequence a , another sequence and the sequence b may meet the foregoing requirement. Therefore, there may be 2 or more Golay complementary sequences in one Golay complementary sequence pair.

Based on types of elements included in the Golay complementary sequence, the Golay complementary sequence may be classified into a binary Golay complementary sequence, a quaternary Golay complementary sequence, a polyphase Golay complementary sequence, and the like.

(4) A roll-off factor (roll-off factor) is also referred to as a roll-off parameter, a roll-off coefficient, or the like. The roll-off factor is used to describe an edge falling slope of a filter. During signal transmission, a roll-off filter of spectrum spreading may be used to extend a bandwidth occupied by a symbol to implement spectrum spreading. A bandwidth occupied by a symbol after extension is 1+α times an original bandwidth, and α is the roll-off factor. For example, the original bandwidth is 10 MHz, and after frequency domain spectral shaping (frequency domain spectral shaping, FDSS) with α = 0.2 is performed, an occupied bandwidth is 12 MHz.

(5) A bandwidth extension factor is also referred to as an extension factor, a bandwidth extension coefficient, an extended bandwidth, or the like. The bandwidth extension factor is a ratio of a bandwidth after extension (PRBs after extension) to the original bandwidth (PRBs before extension). The bandwidth after extension includes the original bandwidth part and the extended part. For example, if the original bandwidth is 100 REs and 100 REs are extended using the roll-off filter of spectrum spreading, the bandwidth after extension is 200 REs, and the bandwidth extension factor is (100 + 100)/100 = 200%.

When the filter used by the system matches the extended bandwidth, the following correspondence exists between the roll-off factor and the bandwidth extension factor: β = 1 + α. That is, the system uses a filter whose roll-off factor is α, and the corresponding extended bandwidth is β = 1 + α. However, in an actual case, the filter does not necessarily strictly match the extended bandwidth. Therefore, there may be another possibility of the correspondence. For example, the correspondence may be β = 0.9 + α or β = 1.1 + α. That is, the system uses a filter whose roll-off factor is α, but the corresponding extended bandwidth is 0.9 + α or β = 1.1 + α.

(6) "A plurality of" mentioned in embodiments of this application means two or more. "And/or" describes an association relationship between associated objects and indicates that three relationships may exist. For example, A and/or B may indicate the following cases: Only A exists, both A and B exist, and only B exists. The character "/" generally indicates an "or" relationship between the associated objects. In addition, it should be understood that although the terms such as first and second may be used in embodiments of the present invention to describe objects, these objects are not limited by these terms. The terms are merely used for distinguishing the objects from each other.

Terms "including", "having", and any other variant thereof mentioned in descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the word "exemplary" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a relative concept in a specific manner.

The technical solutions provided in embodiments of this application are described below with reference to the accompanying drawings.

The technical solutions in embodiments of this application may be applied to various communication systems, for example, a fifth generation (5^{th} generation, 5G) mobile communication system, such as a new radio (new radio, NR) system, a sixth generation (6^{th} generation, 6G) mobile communication system, a universal mobile telecommunications system (universal mobile telecommunications system, UMTS), a wireless local area network (wireless local area network, WLAN), a wireless fidelity (wireless fidelity, Wi-Fi) system, and another future evolved communication system.

Embodiments of this application may be applied to the following scenarios: enhanced mobile broadband (enhanced mobile broadband, eMBB), multi-station transmission (a same terminal device transmits a signal to a plurality of stations), a backhaul scenario, wireless to the x (wireless to the x, WTTx), device to device (device to device, D2D), or another scenario that has a high requirement on timing or a high requirement on a transmission rate.

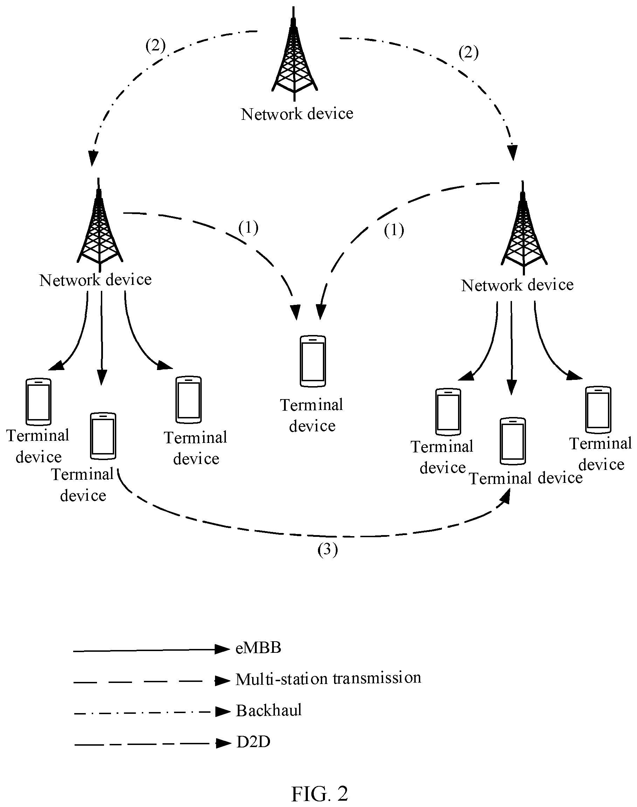

For example, FIG. 2 is a diagram of a communication system to which an embodiment of this application is applicable. As shown in FIG. 2, the communication system may include one or more network devices and one or more terminal devices. An interface between the network device and the terminal device may be a Uu interface (or referred to as an air interface), and data transmission may be performed between the network device and the terminal device via an air interface resource.

FIG. 2 shows an example of a scenario to which an embodiment of this application is applicable, that is, eMBB (shown by a solid line in FIG. 2), multi-station transmission (shown by a dashed line (1) in FIG. 2), a backhaul scenario (shown by a dashed line (2) in FIG. 2), and D2D (shown by a dashed line (3) in FIG. 2). It should be understood that the four scenarios shown in FIG. 2 are merely examples. This is not limited in embodiments of this application.

The network device may be a base station (base station), an evolved NodeB (evolved NodeB, eNodeB), a transmission reception point (transmission reception point, TRP), a next generation NodeB (next generation NodeB, gNB) in a fifth generation (5^{th} generation, 5G) mobile communication system, a next generation base station in a sixth generation (6^{th} generation, 6G) mobile communication system, a base station in a future mobile communication system, an access node in a wireless fidelity (wireless fidelity, Wi-Fi) system, or the like; or may be a module or unit that completes a part of functions of the base station, for example, may be a central unit (central unit, CU), or may be a distributed unit (distributed unit, DU). An access network device may be a macro base station (for example, 110a in FIG. 2), may be a micro base station or an indoor base station (for example, 110b in FIG. 2), may be a relay node or a donor node, or the like. A specific technology and a specific device form that are used by the access network device are not limited in embodiments of this application. In embodiments of this application, an example in which the base station is used as the access network device is used for description.

In a possible scenario, a plurality of RAN nodes cooperatively assist a terminal in implementing wireless access, and different RAN nodes separately implement a part of functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open radio access network (open radio access network, O-RAN or open RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal device may also be referred to as a terminal, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, smart grid, smart furniture, smart office, smart wearable, smart transportation, and smart city. The terminal device may be a mobile phone, a tablet computer, a computer having a wireless transceiver function, a wearable device, a vehicle, an uncrewed aerial machine, a helicopter, an airplane, a ship, a robot, a robotic arm, a smart home device, or the like. A specific technology and a specific device form that are used by the terminal device are not limited in embodiments of this application.

The base station and the UE may be at fixed positions, or may be movable. The base station and the UE may be deployed on land, including an indoor or outdoor scenario, and a handheld or vehicle-mounted scenario; or may be deployed on water; or may be deployed on an airplane, a balloon, and an artificial satellite in the air. Application scenarios of the base station and the UE are not limited in embodiments of this application.

Communication between a base station and a UE, between base stations, and between UEs may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using a spectrum below 6 GHz and a spectrum above 6 GHz. A spectrum resource used for wireless communication is not limited in embodiments of this application.

The communication system and scenario described in embodiments of this application are intended to describe the technical solutions in embodiments of this application more clearly, and do not constitute a limitation on the technical solutions provided in embodiments of this application. A person of ordinary skill in the art may know that: With evolution of a network architecture and emergence of new scenarios, the technical solutions provided in embodiments of this application are also applicable to similar technical problems.

In embodiments of this application, a waveform used for communication between the network device and the terminal device may be a single-carrier waveform, or may be a multi-carrier waveform. In embodiments of this application, a DFT-s-OFDM waveform is used as an example for description.

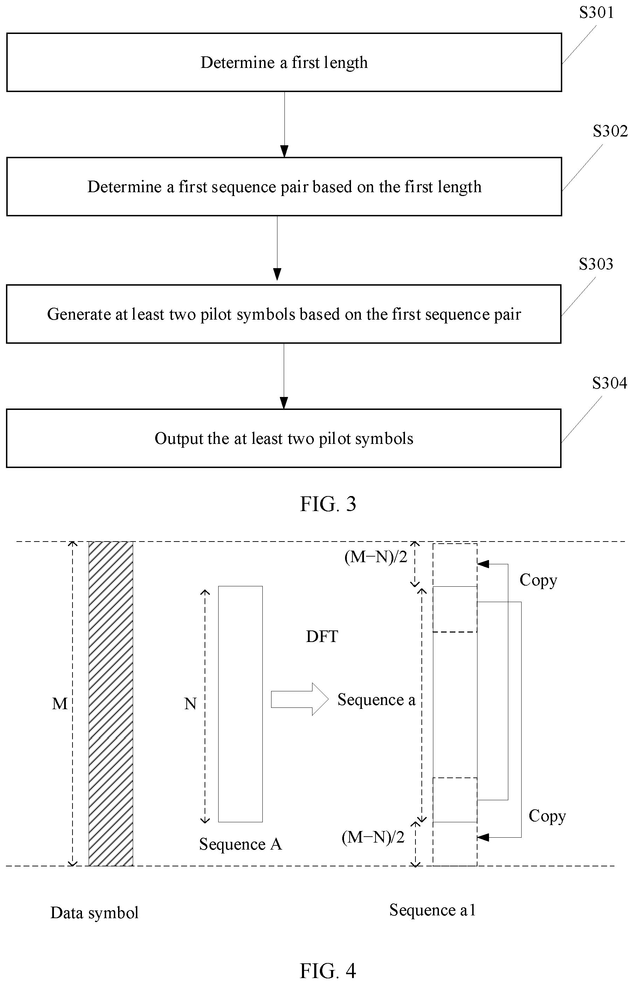

FIG. 3 shows a pilot transmission method according to an embodiment of this application. The method may be applied to the communication system shown in FIG. 2. The method may be performed by a first communication device. Unless otherwise specified, the "first communication device" in this application may be the first communication device (for example, the network device or the terminal device shown in FIG. 2), or may be a component (for example, a processor, a chip, or a chip system) in the first communication device, or may be a logical module or software that can implement all or some functions of the first communication device. The method includes the following steps.

### S301: Determine a first length.

There may be a plurality of implementations for determining the first length, including, but not limited to, the following several implementations:
Manner 1: Receive first information from a network device, where the first information indicates the first length; and the first length may be determined based on the first information.

It may be understood that when the first communication device is a terminal device, the first communication device may receive the first information from the network device; or when the first communication device is a network device, the first communication device may receive the first information from another network device.

In a possible implementation, the first information may directly indicate the first length, that is, the first information is a value of the first length, for example, 512.

In the foregoing implementation, complexity of determining the first length can be reduced.

In another possible implementation, the first information indirectly indicates the first length. For example, the first information includes a factor set, and the factor set includes at least one of a first factor, a second factor, and/or a third factor. The first communication device determines the first length based on the factor set.

For ease of description, in this specification, N is used to represent the first length, a represents the first factor, b represents the second factor, and c represents the third factor. Values of a, b, and c are all natural numbers.

In some embodiments, the factor set includesa , b , and c. a , b , c , and N satisfy the following relationship N = 2^{a}10^{b}26^{c}. After receiving the first information, the first communication device may determine the first length based on a, b, and c, namely, 2^{a}10^{b}26^{c}.

In some embodiments, one or more factors in a, b, and c may be fixed values. In this case, the first information may include only a part other than the fixed value in a, b, and c.

For example, if c is fixed to 0, the first information may include only a and b.

For example, if a is fixed to 1, the first information may include only c and b.

In some embodiments, when a value of any factor in a, b, and c is 0, the first information may not include the factor, or in other words, the factor does not exist.

For example, the factor set includes a and b. a, b, and N satisfy the following relationship: N = 2^{a}10^{b}. In a 5G communication system, a bandwidth scheduling level is a resource block (resource block, RB) level, that is, 12 subcarriers are one RB. Therefore, the scheduling bandwidth is an integer multiple of 12. Therefore, c may be set to be fixed to 0, or in other words, only two factors a and b exist.

For example, the factor set includes a, and a and N satisfy the following relationship: N = 2^{a}.

Certainly, the foregoing is merely an example, and an implementation of the actual factor set is not limited thereto.

In the foregoing implementation, a data amount of the first information can be reduced, thereby reducing resource overheads.

Manner 2: The first length is related to a transmission bandwidth of a first data symbol. The first data symbol and the at least two pilot symbols are mapped to a same frequency domain resource.

In some embodiments, the transmission bandwidth of the first data symbol may refer to a bandwidth before extension (PRBs before extension), or may refer to a bandwidth after extension (PRBs after extension), which is not limited. For ease of description, the following uses the transmission bandwidth before extension as an example.

For ease of description, in this specification, M is used to represent the transmission bandwidth of the first data symbol.

It may be understood that, in this embodiment of this application, the first length is used to determine (or generate) a length of a first sequence pair (referring to S302), that is, a length of each sequence in the first sequence pair is the first length, the first sequence pair is used to generate a pilot symbol (referring to S303), and the pilot symbol is used for channel estimation. Therefore, during determining of the first length, the first length may be determined with reference to the bandwidth of a channel that needs to be estimated (that is, the transmission bandwidth of the first data symbol).

During specific implementation, the transmission bandwidth of the first data symbol may be specifically a frequency bandwidth (for example, 20 MHz) occupied by the first data symbol, a quantity of RBs (for example, 100 RBs) occupied by the first data symbol, a quantity of subcarriers (for example, 1200 subcarriers) occupied by the first data symbol, a quantity of resource elements (resource elements, REs) (for example, 1200 REs) occupied by the first data symbol, or the like.

There may be a plurality of specific implementations of Manner 2. The following provides two possible examples.
(1) The first length is determined based on a correspondence between a transmission bandwidth, a parameter, and a length of a data symbol. The parameter includes a roll-off factor and/or a bandwidth extension.

Specifically, a length corresponding to the transmission bandwidth of the first data symbol and a first parameter is determined based on the correspondence between a transmission bandwidth, a parameter, and a length of a data symbol, and the determined length is the first length, where the first parameter includes a roll-off factor and/or a bandwidth extension factor used to generate the first data symbol. For the roll-off factor and the bandwidth extension factor, refer to related definitions in the foregoing technical terms. Details are not described herein again.

Table 1 provides a specific example of the correspondence. One row in Table 1 is a group of a transmission bandwidth, a roll-off factor, and a length that correspond to each other.

**Table 1**

| Transmission bandwidth (a quantity of REs) of a data symbol | Roll-off factor | Length (2^{a}10^{b}26^{c}) |
|---|---|---|
| 960 | 0.2 | 512 |
| 960 | 1 | 640 |

Certainly, during actual application, the correspondence is not limited to the example provided in Table 1.

For example, when the transmission bandwidth is 960 REs and the roll-off factor is 0.2, the length is not limited to 512; or when the transmission bandwidth is 960 REs and the roll-off factor is 1, the length is not limited to 640.

For example, the correspondence may include only some roll-off factors and lengths shown in Table 1; or the correspondence may further include other roll-off factors or lengths, for example, 520, 676, 800, and 832 shown in Table 2. It may be understood that a value of the roll-off factor is not shown in Table 2.

**Table 2**

| Transmission bandwidth (a quantity of REs) of a data symbol | Roll-off factor | Length (2^{a}10^{b}26^{c}) |
|---|---|---|
| 960 | - | 520 |
| 960 | - | 676 |
| 960 | - | 800 |
| 960 | - | 832 |

For example, a form of the table may alternatively be that each column is a group of a transmission bandwidth, a roll-off factor, and a length that correspond to each other.

For example, a manner of representing the correspondence is not limited to a table, and may be, for example, an array or a text description.

During specific implementation, the correspondence may be specified in a protocol, or may be preconfigured in the first communication device, or may be notified to the first communication device by another device (for example, a network device). This is not limited in this application.

In the foregoing implementation, a first terminal device may quickly determine the first length based on the correspondence, so that complexity of determining the first length can be reduced while transmission overheads are reduced.

(2) The first length is determined based on the transmission bandwidth of the first data symbol and the first parameter. The first parameter includes a roll-off factor and/or a bandwidth extension factor used to generate the first data symbol.

In a possible implementation, the first length is as follows: Under a constraint condition of the transmission bandwidth of the first data symbol and the first parameter, a PAPR of the pilot symbol is less than a PAPR of the first data symbol, and the PAPR of the pilot symbol can reach an optimal (for example, a minimum) length.

For example, the transmission bandwidth of the first data symbol is 100 RBs = 1200 REs, the bandwidth extension factor is 100% (or the roll-off factor is 0), and the first data symbol is transmitted in a Pi/2-BPSK manner. In this case, to prevent a channel estimation loss caused by a non-linearity of the pilot symbol that is generated because the PAPR of the pilot symbol is higher than the PAPR of the first data symbol being greater than data, the PAPR of the pilot symbol needs to be lower than the PAPR of the first data symbol. Because the bandwidth extension factor of the first data symbol is 100% (that is, the first data symbol actually occupies 100 RBs), the bandwidth extension factor of the pilot symbol should be greater than or equal to 100% and less than or equal to 170%, so that it can be ensured that the PAPR of the pilot symbol is not higher than the PAPR of the first data symbol. When the bandwidth extension factor of the pilot symbol is 150%, the PAPR of the pilot symbol may be optimal (for example, minimal). 170% and 150% are empirical parameters. In practice, there are other possible values.

During specific implementation, a first coefficient afa may be determined based on the transmission bandwidth, the roll-off factor, and/or the bandwidth extension factor corresponding to the first data symbol, and then an optimal solution (that is, a length of the pilot symbol can reach a minimum PAPR) of the first length is found based on the first coefficient afa.

The first coefficient afa is a coefficient (which may be referred to as a PAPR optimization coefficient) used to optimize the PAPR. The first coefficient afa corresponds to a roll-off factor and/or a bandwidth extension factor corresponding to the pilot symbol when the PAPR of the pilot symbol is optimal. This means that under a constraint condition of the transmission bandwidth of the first data symbol and the roll-off factor and/or the bandwidth extension factor used to generate the first data symbol, the first length obtained based on the first coefficient enables the PAPR of the pilot symbol to be optimal.

Optionally, afa may be a scaling factor, and may represent a ratio of a total bandwidth length of the pilot symbol after bandwidth extension to the first length. During specific implementation, a value of afa may be determined through data simulation. For example, when the bandwidth extension factor is 100%, afa may be 1/2.

For example, the first length is determined based on the transmission bandwidth of the first data symbol, the first parameter, the first coefficient afa, and the second coefficient. The second coefficient is 2^{a}10^{b}26^{c}. Specifically, examples are as follows:
determining the first length based on the transmission bandwidth of the first data symbol, the roll-off factor used to generate the first data symbol, a first coefficient afa, and a second coefficient; or
determining the first length based on the transmission bandwidth of the first data symbol, the bandwidth extension factor used to generate the first data symbol, a first coefficient afa, and a second coefficient.

During specific implementation, the first length may be calculated using a formula, for example: $Length_GCS = {min}_{\left(a, b, c\right)} \left(abs\left(Data_Num∗Extend_BW∗afa-{2}^{a}{10}^{b}{26}^{c}\right)\right)$ or $Length_GCS = {min}_{\left(a, b, c\right)} \left(abs\left(Data_Num∗\left(1+Roll_off\right)∗afa-{2}^{a}{10}^{b}{26}^{c}\right)\right) .$ abs represents an absolute value (absolute value) function. Data_Num represents the transmission bandwidth (for example, M in the foregoing description) of the first data symbol, Extend_BW represents the bandwidth extension factor corresponding to the first data symbol, and Roll_off represents the roll-off factor corresponding to the first data symbol. Data_{Num} ∗ (1 + Roll_{off}) represents a total bandwidth length of the first data symbol after bandwidth extension.

The foregoing formula means calculating a first length that can enable the PAPR of the pilot symbol to be optimal (for example, minimal), where the first length is as close as possible to the total bandwidth length of the first data symbol after bandwidth extension.

Based on the foregoing formula, a, b, and c that enable a value of Length_GCS to be minimal are calculated, and the first length 2^{a}10^{b}26^{c} is obtained based on the calculated a, b, and c.

The foregoing design enables the PAPR of the data symbol to be optimal (for example, minimal).

In another possible implementation, the first length is a maximum length that enables the PAPR of the pilot symbol to be less than the PAPR of the first data symbol and enables the first length to be equal to 2^{a}10^{b}26^{c} under a constraint condition of the transmission bandwidth of the first data symbol and the first parameter.

In other words, instead of enabling the PAPR of the pilot symbol to be optimal, the PAPR of the pilot symbol only needs to be less than or equal to the PAPR of the first data symbol. In this case, a length that meets the requirement may fall within an interval range, and a maximum length within the interval range is selected as the first length.

During specific implementation, two afa instances, for example, afa 1 and afa 2, may be determined based on a PAPR range, and respectively correspond to two extremums of the PAPR range, so that the value of the first length is calculated based on afa 1 and afa.

For example, the first length (namely, N) simultaneously satisfies the following items:
$N = {2}^{a} {10}^{b} {26}^{c} .$
$N \geq abs \left(Data_Num*Extend_BW*afa 1\right) .$

afa 1 corresponds to the minimal PAPR of the pilot symbol, that is, under a constraint condition of the transmission bandwidth of the first data symbol and the bandwidth extension factor used to generate the first data symbol, the first length calculated based on afa 1 enables the PAPR of the pilot symbol to be optimal (for example, minimal).$N \leq abs \left(Data_Num*Extend_BW*afa 2\right) .$

afa 2 corresponds to the PAPR of the first data symbol, that is, under a constraint condition of the transmission bandwidth of the first data symbol and the bandwidth extension factor used to generate the first data symbol, the first length calculated based on afa 2 enables the PAPR of the pilot symbol to reach the PAPR of the first data symbol.${Length}_{GCS} = {min}_{\left(a, b, c\right)} \left(abs\left({Data}_{Num}∗\left(1+{Roll}_{off}\right)∗afa-{2}^{a}{10}^{b}{26}^{c}\right)\right) .$

Data_{Num} ∗ (1 + Roll_{off}) represents the total bandwidth length of the first data symbol after bandwidth extension, afa corresponds to an actual PAPR of the pilot symbol, and Data_{Num} ∗ (1 + Roll_{off}) ∗ afa represents the total bandwidth length of the pilot symbol after bandwidth extension.

The foregoing four formulas mean calculating a first length that can enable the PAPR of the pilot symbol to be within a PAPR range, where the first length is as close as possible to the total bandwidth length of the first data symbol after bandwidth extension.

In the foregoing design manner, channel estimation in a multi-antenna scenario can be better supported while a requirement that the PAPR of the pilot symbol is less than the PAPR of the first data symbol is met. When the first sequence pair is longer, more options can be provided for multiple antennas to perform a time domain cyclic shift.

In the foregoing implementation, the first terminal device may determine the first length based on the transmission bandwidth of the first data symbol and the first parameter, so that transmission overheads can be reduced.

It may be understood that the first length N determined in this embodiment of this application may be the same as or different from the transmission bandwidth M of the first data symbol.

In some embodiments, the first length N is greater than or equal to the transmission bandwidth M of the first data symbol.

For example, N is equal to 2^{a}10^{b}26^{c}, N is a minimum integer greater than or equal to M, and a, b, and c are natural numbers; or
for example, N is equal to 2^{a}10^{b}, N is a minimum integer greater than or equal to M, and a and b are natural numbers; or
for example, N is equal to 2^{a}, N is a minimum integer greater than or equal to M, and a is a natural number.

For example, N is equal to 2*^{a}*10^{b}26^{c}, and N is a minimum integer greater than or equal to M: M = 600 REs, and a value range of the first length should be [0, 600]. To enable performance of channel estimation to be optimal, a longer length is preferable. According to 2^{a}10^{b}26^{c}, optional lengths close to 600 are 512, 520, and 640. As shown in Table 3, a maximum value less than or equal to 600 may be selected. Based on this criterion, the first length is 520.

In some other embodiments, the first length N is less than or equal to the transmission bandwidth M of the first data symbol.

For example, N is equal to 2^{a}10^{b}26^{c}, N is a maximum integer less than or equal to M, and a, b, and c are natural numbers; or
for example, N is equal to 2^{a}10^{b}, N is a maximum integer less than or equal to M, and a and b are natural numbers; or
for example, N is equal to 2^{a}, N is a maximum integer less than or equal to M, and a is a natural number.

For example, N is equal to 2^{a}10^{b}26^{c}, and N is a maximum integer less than or equal to M: M = 600 REs, and a value range of the first length should be [600, +∞]. To reduce overheads of channel estimation, a shorter length is preferable. According to 2^{a}10^{b}26^{c}, optional lengths close to 600 are 512, 640, and 640. As shown in Table 3, a minimum value greater than or equal to 600 may be selected. Based on this criterion, the first length is 520.

**Table 3**

| Transmission bandwidth (a quantity of REs) of a data symbol | Length (2^{a}10^{b}26^{c}) |
|---|---|
| | 512 |
| 600 | 520 |
| | 640 |

**S302: Determine the first sequence pair based on the first length.**

Determining the first sequence pair based on the first length may alternatively be described as: generating the first sequence pair based on the first length.

Optionally, the first sequence pair is a Golay complementary sequence pair. Further optionally, the first sequence pair is a binary Golay complementary sequence pair. The binary Golay complementary sequence enables a PAPR of a finally generated pilot signal to be lower.

The first sequence pair includes at least two sequences, and a length of each of the at least two sequences is the first length.

In an example, determining the first sequence pair based on the first length may be generating the first sequence pair based on an identity (identity document, ID) of a user or a cell and the first length.

The following uses an example in which a first sequence pair whose length is 2^{N1} (2^{N1} represents the first length) is generated:

### Step 1: Generate Cᵢₙᵢₜ:

${C}_{init} = \left({2}^{{N}_{ID}^{{n}_{SCID}} + 1}\left({2}^{{N}_{ID}^{{n}_{SCID}}}+1\right)\left(14{n}_{s}+\left⌊\frac{1}{2}\right⌋\right)+2{N}_{ID}^{{n}_{SCID}}+{n}_{ID}^{SCID}\right) {mod 2}^{{N}_{1}} .$

Cᵢₙᵢₜ is a random number related to an ID of a user (or a cell), and is used to distinguish a different user (or cell). ${N}_{ID}^{{n}_{SCID}}$ represents higher-layer configured scrambling ID of a DMRS; *nₛ* represents a slot index within a frame; 1 represents an index of an OFDM symbol within a slot (slot); ${n}_{ID}^{SCID}$ represents an initial value offset (which is 0 or 1) of a DMRS ID; and SCID is a scrambling ID (scrambling ID), that is, a scrambling code for a different ID.

In the following, for example, *Cᵢₙᵢₜ* = 10.

### Step 2: Change Cᵢₙᵢₜ to a binary form to obtain a generation function:

${C}_{init}^{2} = dec 2 bin \left({C}_{init}\right)$, to obtain a binary vector ${C}_{init}^{2}$ with a length of N1;
x = dec2bin(0: 2^{*N*₁} - 1), where x is a binary number matrix of 2^{*N*₁} * *N*₁;
the generation function: $\begin{matrix}f \left(x\right) = \left(x:,1\right) . ∗ \left(x:,2\right) + \left(x:,2\right) . ∗ \left(x:,3\right) + ⋯ + \left(x:,{N}_{1}-1\right) . ∗ \left(x:,{N}_{1}\right) + \\ {C}_{init}^{2} \left(0\right) \left(x:,1\right) + {C}_{init}^{2} \left(1\right) \left(x:,2\right) + ⋯ + {C}_{init}^{2} \left({N}_{1}\right) \left(x:,{N}_{1}\right) .\end{matrix}$

Step 3: Obtain a Golay complementary sequence pair with a length of 2^{*N*₁}, where an example in which one Golay complementary sequence pair includes two Golay complementary sequences is used. $r \left(2n\right) = \left(-1\right) {.}^{∧} f \left(x\right) ;$ and $r \left(2n+1\right) = \left(-1\right) {.}^{∧} \left(f\left(x\right)+\left(x:,1\right)\right) .$

**S303: Generate at least two pilot symbols based on the first sequence pair.**

In a possible implementation, if the first length N (namely, a length of a sequence in the first sequence pair) is less than the transmission bandwidth M, each sequence in the first sequence pair may be extended to a same length as the transmission bandwidth to obtain an extended first sequence pair; and the at least two pilot symbols are then generated based on the extended first sequence pair.

In an example, a sequence in the first sequence pair may be extended in frequency domain, that is: performing a DFT on any sequence in the first sequence pair; and cyclically extending the any sequence obtained after DFT to extend a length of the any sequence obtained after DFT from N to M.

As shown in FIG. 4, the first sequence pair includes a sequence A whose length is N. A DFT is first performed on the sequence A to obtain a frequency domain sequence a whose length is N; and then the sequence a is cyclically extended to obtain a frequency domain sequence a1 whose length is M. A cyclic extension process is as follows: copying the last (M-N)/2 values of the original sequence to the front of the sequence a and copying the first (M-N)/2 values of the original sequence a to the end of the sequence a to obtain the frequency domain sequence a1 whose length is M: a1 = [a(N-(M-N)/2+1), a(N-(M-N)/2+2), ..., a(N), a(1), ..., a(N), a(1), a(2), ..., a(M-N/2)].

It may be understood that FIG. 4 is merely an example, and an actual cyclic extension manner is not limited thereto.

In another example, the sequence in the first sequence pair may be extended in time domain. That is, before a DFT is performed on any sequence in the first sequence pair, the any sequence is padded with zeros to extend a length of the any sequence from N to M, where a quantity of padded zeros is M-N.

For a position for padding zeros, zeros may be padded at the head of the sequence, or zeros may be padded at the tail of the sequence, or zeros may be padded at equal intervals between elements in the sequence, or the like. This is not limited.

For example, for the sequence A whose length is N, A = [a(1), a(2), ..., a(N)], and zeros are padded in the sequence A to obtain a sequence a2 whose length is M: a2 = [0, 0, 0, ..., 0, a(1), a(2), ..., a(N)], [a(1), a(2), ..., a(N), 0, 0, ..., 0], [a(1), 0, a(2), 0, ..., a(N-1), 0, a(N)], or the like.

The example in which the first length is 2^{N1} in S302 is still used. After step 3, step 4 may be further performed.

Step 4: If a length M (that is, the transmission bandwidth) of a sequence that finally needs to be generated is not equal to 2^{*N*₁}, for example, M = 2^{N₁} * *C*^{N₂}, where *C*^{N₂} is a positive integer, the sequence may be extended N2 times using the following formula, so that a length of the extended sequence is 2^{N₁} * *C*^{N₂}: $r ′ \left(2n\right) = a ⊙ \left(r\left(2n\right)+r\left(2n+1\right)\right) / 2 + b ⊙ \left(r\left(2n\right)+r\left(2n+1\right)\right) / 2 ;$ and $r ′ \left(2n+1\right) = a ⊙ \left(r\left(2n\right)+r\left(2n+1\right)\right) / 2 - b ⊙ \left(r\left(2n\right)+r\left(2n+1\right)\right) / 2 .$

⊙ is a Kronecker (Kronecker) product, and refers to an operation of a matrix of any size. For example, when N2 = 10, *a* = [1 - 1 - 11 - 11 - 1 - 1 - 11] and b = [1 - 1 - 1 - 1 - 1 - 1 - 111 - 1].

In another possible implementation, if the first length N (namely, a length of a sequence in the first sequence pair) is greater than the transmission bandwidth M, each sequence in the first sequence pair may be truncated to obtain a truncated first sequence pair; and the at least two pilot symbols are generated based on the truncated first sequence pair. Optionally, a length of the truncated sequence is M.

A truncation manner may be truncating the first (N-M) elements of the sequence, or truncating the last (N-M) elements of the sequence, or truncating (N-M) elements at equal intervals from the sequence, or the like. This is not limited. For example, the first sequence pair includes a sequence A whose length is N, where A = [a(1), a(2), a(3), ..., a(N)]. The truncated sequence may be: a1=[a((N-M)+1), a((N-M)+2), ..., a(N)], [a(1), a(2), ..., a(M)], [a(1), a(3), a(5), ..., a(M)], or the like.

**S304: Output the at least two pilot symbols.**

Outputting the at least two pilot symbols may be outputting N pilot symbols to one processing unit (for example, intermediate radio frequency), or may be sending the at least two pilot symbols using a carrier. This is not limited in embodiments of this application.

**In the foregoing S301 to S304**, during generation of pilot symbols, a length (that is, the first length) of a sequence used to generate pilot symbols is considered, and a plurality of implementations of determining the first length are provided, so that pilot symbols can be generated based on a sequence pair of an appropriate length, and bandwidths occupied by generated pilot symbols match (for example, are consistent with) a bandwidth occupied by a data symbol, thereby ensuring that a receiving end can effectively estimate all channels that need to be estimated without incurring additional overheads of channel estimation. Therefore, a technical effect of balancing overheads and effectiveness of channel estimation can be achieved.

In a possible design, pilot symbols having complementary properties use same spectrum spreading. For example, filters used to generate the pilot symbols in the at least two pilot symbols are the same, and/or bandwidth extension factors used to generate the pilot symbols in the at least two pilot symbols are the same.

In this way, the pilot symbols with complementary properties can be generated or processed based on a same filter, and support is provided for the receiving end to jointly process the pilot symbols with complementary properties.

In a possible design, pilot symbols within a same time domain window (time domain window, TDW) use same spectrum spreading. The TDW is a time block used for (joint) pilot enhancement. In other words, the receiving end (for example, a second communication device) of the pilot symbol may perform (joint) channel estimation on the pilot symbol in the TDW. There is no uplink-downlink switching within the TDW, and/or symbol transmission within the TDW meets requirements of phase continuity and power continuity.

For example, the at least two pilot symbols are located within a first TDW. A same filter is used to generate a plurality of pilot symbols within the first TDW, and/or a same bandwidth extension factor is used to generate a plurality of pilot symbols within the first TDW.

In this way, the pilot symbols within a TDW can be generated or processed based on a same filter, and support is provided for the receiving end to jointly process the pilot symbols within a TDW.

In a possible design, pilot symbols and data symbols use same spectrum spreading. For example, a filter used to generate the at least two pilot symbols is the same as a filter used to generate the first data symbol; and/or a bandwidth extension factor used to generate the at least two pilot symbols is the same as the bandwidth extension factor used to generate the first data symbol.

In this way, pilot symbols and data symbols may be generated or processed based on a same filter, and transparent transmission is enabled without distinguishing between pilot symbols and data symbols, thereby reducing complexity of signal processing.

**The foregoing describes a pilot transmission method on a first communication device side, and the following describes a pilot transmission method on a second communication device side.**

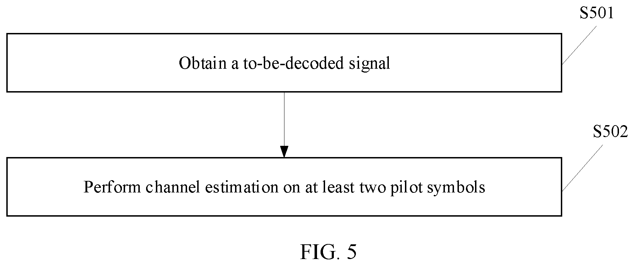

Referring to FIG. 5, an embodiment of this application further provides a pilot transmission method. The method may be performed by a second communication device. Unless otherwise specified, the "second communication device" in this application may be the second communication device (for example, the network device or the terminal device shown in FIG. 2), or may be a component (for example, a processor, a chip, or a chip system) in the second communication device, or may be a logical module or software that can implement all or some functions of the second communication device. The method includes the following steps.

**S501: Obtain a to-be-decoded signal.**

The to-be-decoded signal includes at least two pilot symbols, the at least two pilot symbols are generated based on a first sequence pair, the first sequence pair includes at least two sequences, and a length of each of the at least two sequences is a first length.

For a specific design of the first length, refer to related descriptions in the embodiment shown in FIG. 3 above. Details are not described herein again.

**S502: Perform channel estimation on the at least two pilot symbols.**

In some embodiments, the second communication device may perform channel estimation on each of the at least two pilot symbols.

In some other embodiments, the second communication device may perform (joint) channel estimation on the at least two pilot symbols.

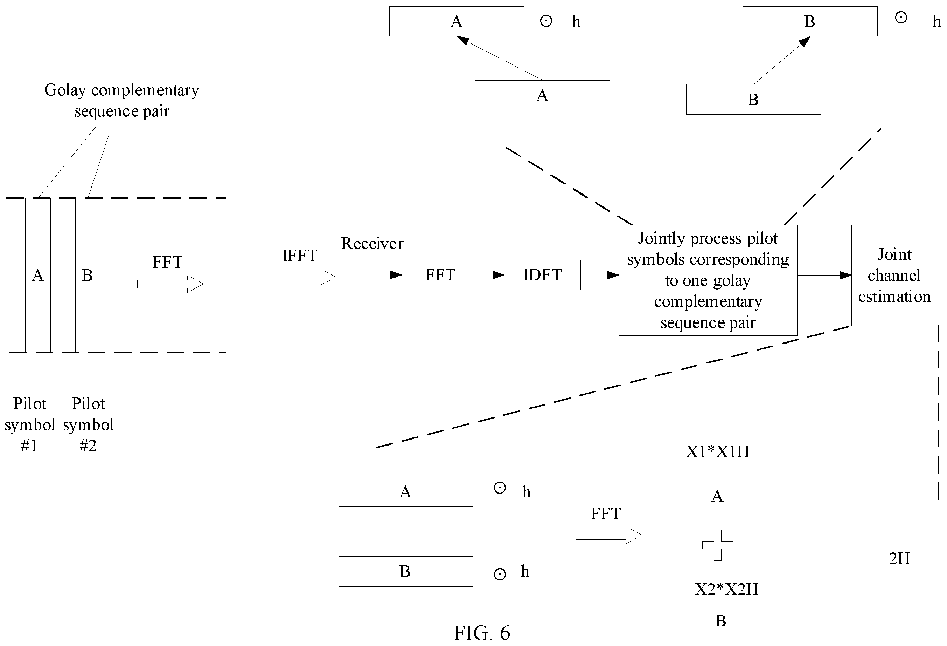

For example, referring to FIG. 6, a specific implementation method for performing (joint) channel estimation on the at least two pilot symbols may be as follows:
(1) The second communication device receives time domain pilot symbols y1 and y2, which correspond to a pilot symbol x1 and a pilot symbol x2 that arrive at a receiver through a channel. Received signals may be represented as y1=h⊙x1+n, y2=h⊙x2+n, where ⊙ represents cyclic convolution, and n is noise. Noise is ignored subsequently.
(2) Perform an FFT on the time domain pilot symbols y1 and y2 to obtain a frequency domain received signal: $Y 1 = FFT \left(y1\right) = HX 1 ; and Y 2 = FFT \left(y2\right) = HX 2 .$
   X1 is a frequency domain signal of a pilot symbol #1, and X2 is a frequency domain signal of a pilot symbol #2. The pilot symbol #1 and the pilot symbol #2 are generated based on one Golay complementary sequence pair (in the generation process, another operation such as 0 padding, copying, or multiplication by a Pulse shaping filter may have been performed).
(3) Perform an operation of multiplying Y1 and Y2 by conjugates of known signals X1 and X2 respectively and adding the products: $X 1 * Y 1 + X 2 * Y 1 = X 1 * X 1 H + X 2 * X 2 H = AH .$

Because X1 and X2 are generated based on one Golay complementary sequence pair, for any subcarrier in frequency domain, the following properties exist: $X 1 \left(n\right) * X 1 \left(n\right) + X 2 \left(n\right) * X 2 \left(n\right) = A \left(n\right) .$

n represents a frequency domain subcarrier index. Generally, if there is no other operation such as 0 padding, copying, or multiplication by a Pulse shaping filter, for any n, A(n) = 2. However, considering that other operations such as 0 padding, copying, or multiplication by a Pulse shaping filter may be performed, A(n) is not necessarily strictly equal to 2, but the second communication device considers that the frequency domain data is multiplied by a same coefficient A. That is, for a data signal within the TDW, there is a frequency domain received signal: $Y 3 = AHX 3 .$

Therefore, AH obtained based on the operation of multiplying Y1 and Y2 by the conjugates of the known signals X1 and X2 respectively and adding the products may be used to equalize Y3 to obtain a sent data signal X3.

The foregoing (1) to (3) are a (joint) channel estimation procedure performed based on one Golay complementary sequence pair. During actual application, it may alternatively be considered that there may be a plurality of Golay complementary pairs, and (joint) channel estimation is performed based on the plurality of Golay complementary sequence pairs.

**In the foregoing S501 and S502**, the pilot symbols received by the second communication device are generated based on the first sequence pair, so that all channels that need to be estimated can be effectively estimated without incurring additional overheads of channel estimation, and both overheads and effectiveness of channel estimation are considered.

Optionally, the second communication device is a network device, and a first communication device may further send first information to another device such as a first communication device, where the first information indicates the first length. In this way, the first communication device can determine a sequence pair based on a length indicated by the second communication device to generate pilot symbols.

Optionally, the second communication device may alternatively determine the first length. For example:

Manner 1: Information is received from another network device, and the first length is determined based on the information.

Manner 2: The first length is determined based on a correspondence between a transmission bandwidth, a parameter, and a length of a data symbol.

Manner 3: The first length is determined based on the transmission bandwidth of the first data symbol and the first parameter.

For a specific implementation, refer to the related implementation in the embodiment shown in FIG. 3 above. Details are not described again.

The methods provided in embodiments of this application are described above with reference to the accompanying drawings. The following describes apparatuses provided in embodiments of this application with reference to the accompanying drawings.

Based on a same technical concept, an embodiment of this application provides a communication apparatus 700. The apparatus 700 may be, for example, a satellite, a base station, a terminal, an access point, or a chip inside a satellite, a base station, a terminal, or an access point. The apparatus 700 includes a corresponding module, unit, or means (means) for performing the method steps in the foregoing method embodiment. The function, unit, or means may be implemented by software, may be implemented by hardware, or may be implemented by hardware executing corresponding software.

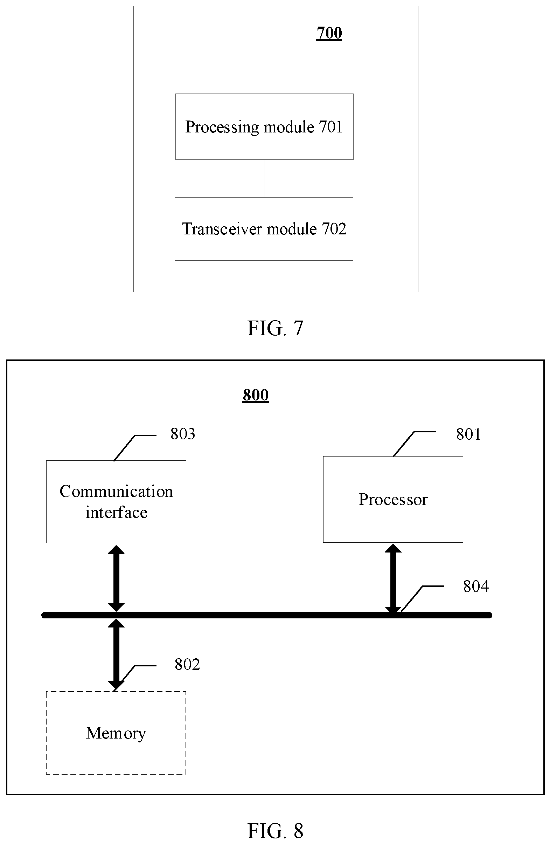

For example, referring to FIG. 7, the apparatus 700 may include a processing module 701 and a transceiver module 702.

When located in a first communication device, the apparatus 700 includes:
a processing module 701, configured to: determine a first length; determine a first sequence pair based on the first length, where the first sequence pair includes at least two sequences, and a length of each of the at least two sequences is the first length; and generate at least two pilot symbols based on the first sequence pair; and
a transceiver module 702, configured to output the at least two pilot symbols.

When located in a second communication device, the apparatus 700 includes:
a transceiver module 702, configured to obtain a to-be-decoded signal, where the to-be-decoded signal includes at least two pilot symbols, the at least two pilot symbols are generated based on a first sequence pair, the first sequence pair includes at least two sequences, and a length of each of the at least two sequences is a first length; and
a processing module 701, configured to perform channel estimation on the at least two pilot symbols.

It should be understood that all related content of the steps in the foregoing method embodiment may be cited in function descriptions of corresponding functional modules. Details are not described herein again.

Based on a same technical concept, referring to FIG. 8, an embodiment of this application further provides a communication apparatus 800, including:
at least one processor 801; and a communication interface 803 communicatively connected to the at least one processor 801, where the at least one processor 801 executes instructions stored in the memory 802, so that the apparatus performs the method steps in the foregoing method embodiment using the communication interface 803.

Optionally, the memory 802 is located outside the apparatus 800.

Optionally, the apparatus 800 includes the memory 802. The memory 802 is connected to the at least one processor 801, and the memory 802 stores the instructions that can be executed by the at least one processor 801. In FIG. 8, a dashed line is used for indicating that the memory 802 is optional for the apparatus 800.

The processor 801 and the memory 802 may be coupled by using an interface circuit, or may be integrated. This is not limited herein.

A specific connection medium among the processor 801, the memory 802, and the communication interface 803 is not limited in this embodiment of this application. In this embodiment of this application, the processor 801, the memory 802, and the communication interface 803 are connected by a bus 804 in FIG. 8. The bus is represented by a bold line in FIG. 8. A connection manner between other components is merely an example for description, and imposes no limitation. The bus may be classified into an address bus, a data bus, a control bus, and the like. For ease of representation, only one thick line is for representing the bus in FIG. 8, but this does not mean that there is only one bus or only one type of bus.

A specific connection medium among the processor 801, the memory 802, and the communication interface 803 is not limited in this embodiment of this application. In this embodiment of this application, the processor 801, the memory 802, and the communication interface 803 are connected by a bus 804 in FIG. 8. The bus is represented by a bold line in FIG. 8. A connection manner between other components is merely an example for description, and imposes no limitation. The bus may be classified into an address bus, a data bus, a control bus, and the like. For ease of representation, only one thick line is for representing the bus in FIG. 8, but this does not mean that there is only one bus or only one type of bus.

It should be understood that the processor mentioned in embodiments of this application may be implemented by hardware or by software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application specific integrated circuit (Application Specific Integrated Circuit, ASIC), a field programmable gate array (Field Programmable Gate Array, FPGA), or another programmable logic device, discrete gate or transistor logic device, discrete hardware component, or the like. The general-purpose processor may be a microprocessor, or the processor may be any conventional processor or the like.

It should be understood that the memory mentioned in embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example and not limitation, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that, when the processor is a general-purpose processor, a DSP, an ASIC, an FPGA or another programmable logic device, a discrete gate or a transistor logic device, or a discrete hardware component, a memory (storage module) may be integrated into the processor.

It should be noted that the memory described in this specification aims to include but not limited to these memories and any memory of another proper type.

Based on a same technical idea, an embodiment of this application further provides a computer-readable storage medium, including a program or instructions. When the program or the instructions are run on a computer, the method in the foregoing method embodiment is performed.

Based on a same technical concept, an embodiment of this application further provides a computer program product, including instructions. When the instructions are run on a computer, the method in the foregoing method embodiment is performed.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including, but not limited to, a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. A pilot transmission method, comprising:
determining a first length;
determining a first sequence pair based on the first length, wherein the first sequence pair comprises at least two sequences, and a length of each of the at least two sequences is the first length;
generating at least two pilot symbols based on the first sequence pair; and
outputting the at least two pilot symbols.

2. The method according to claim 1, wherein the first sequence pair is a Golay complementary sequence pair.

3. The method according to claim 1 or 2, wherein determining the first length comprises:
receiving first information from a network device, wherein the first information indicates the first length; and
determining the first length based on the first information.

4. The method according to claim 3, wherein the first information comprises a factor set, and the factor set comprises at least one of a first factor, a second factor, and/or a third factor; and
determining the first length based on the first information comprises:
determining the first length based on the factor set.

5. The method according to claim 4, wherein the first factor, the second factor, the third factor, and the first length satisfy the following relationship: $N = {2}^{a} {10}^{b} {26}^{c} ,$ wherein N is the first length, a is the first factor, b is the second factor, c is the third factor, and a, b, and c are natural numbers.

6. The method according to claim 1 or 2, wherein the first length is related to a transmission bandwidth of a first data symbol, and the first data symbol and the at least two pilot symbols are mapped to a same frequency domain resource.

7. The method according to claim 6, wherein determining the first length comprises:
determining, based on a correspondence between a transmission bandwidth, a parameter, and a length of a data symbol, a length corresponding to the transmission bandwidth of the first data symbol and a first parameter, and using the determined length as the first length, wherein the parameter comprises a roll-off factor and/or bandwidth extension, and the first parameter comprises a roll-off factor and/or a bandwidth extension factor used to generate the first data symbol.

8. The method according to claim 6, wherein determining the first length comprises:
determining the first length based on the transmission bandwidth of the first data symbol and a first parameter, wherein the first parameter comprises a roll-off factor and/or a bandwidth extension factor used to generate the first data symbol.

9. The method according to claim 8, wherein determining the first length based on the transmission bandwidth of the first data symbol and the first parameter comprises:
determining the first length based on the transmission bandwidth of the first data symbol, the roll-off factor used to generate the first data symbol, a first coefficient afa, and a second coefficient, wherein the second coefficient is 2^{a}10^{b}26^{c}, and a, b, and c are natural numbers; or
determining the first length based on the transmission bandwidth of the first data symbol, the bandwidth extension factor used to generate the first data symbol, a first coefficient afa, and a second coefficient, wherein the second coefficient is 2^{a}10^{b}26^{c}, and a, b, and c are natural numbers.

10. The method according to any one of claims 6 to 9, wherein the first length is N, and the transmission bandwidth of the first data symbol is M; and
N is equal to 2^{a}10^{b}26^{c}*,* N is a maximum integer less than or equal to M, and a, b, and c are natural numbers; or
N is equal to 2^{a}10^{b}, N is a maximum integer less than or equal to M, and a and b are natural numbers; or
N is equal to 2^{a}, N is a maximum integer less than or equal to M, and a is a natural number.

11. The method according to claim 10, wherein generating the at least two pilot symbols based on the first sequence pair comprises:
if N is less than M, extending each sequence in the first sequence pair to a same length as the transmission bandwidth to obtain an extended first sequence pair; and
generating the at least two pilot symbols based on the extended first sequence pair.

12. The method according to claim 11, wherein extending each sequence in the first sequence pair to the same length as the transmission bandwidth comprises:
performing a discrete fourier transform DFT on any sequence in the first sequence pair; and
cyclically extending the any sequence obtained after DFT to extend a length of the any sequence obtained after DFT from N to M.

13. The method according to claim 11, wherein extending each sequence in the first sequence pair to the same length as the transmission bandwidth comprises:
before a DFT is performed on any sequence in the first sequence pair, padding the any sequence with zeros to extend a length of the any sequence from N to M, wherein a quantity of padded zeros is M-N.

14. The method according to claim 11, wherein padding the any sequence with zeros comprises one or more of the following:
padding zeros at a head of the any sequence;
padding zeros at a tail of the any sequence; and
padding zeros at equal intervals between elements in the any sequence.

15. The method according to any one of claims 6 to 9, wherein the first length is N, and the transmission bandwidth of the first data symbol is M; and
N is equal to 2^{a}10^{b}26^{c}*,* N is a minimum integer greater than or equal to M, and a, b, and c are natural numbers; or
N is equal to 2^{a}10^{b}, N is a minimum integer greater than or equal to M, and a and b are natural numbers; or
N is equal to 2^{a}, N is a minimum integer greater than or equal to M, and a is a natural number.

16. The method according to claim 15, wherein generating the at least two pilot symbols based on the first sequence pair comprises:
if N is greater than M, truncating each sequence in the first sequence pair to obtain a truncated first sequence pair; and
generating the at least two pilot symbols based on the truncated first sequence pair.

17. The method according to any one of claims 1 to 16, wherein a same filter is used to generate the pilot symbols in the at least two pilot symbols, and/or a same bandwidth extension factor is used to generate the pilot symbols in the at least two pilot symbols.

18. The method according to any one of claims 1 to 17, wherein the at least two pilot symbols are located within a time domain window TDW; and a same filter is used to generate a plurality of pilot symbols within the TDW, and/or a same bandwidth extension factor is used to generate a plurality of pilot symbols within the TDW.

19. The method according to any one of claims 6 to 16, wherein a filter used to generate the pilot symbols is the same as a filter used to generate the first data symbol; and/or a bandwidth extension factor used to generate the pilot symbols is the same as the bandwidth extension factor used to generate the first data symbol.

20. A pilot transmission method, comprising:
obtaining a to-be-decoded signal, wherein the to-be-decoded signal comprises at least two pilot symbols, the at least two pilot symbols are generated based on a first sequence pair, the first sequence pair comprises at least two sequences, and a length of each of the at least two sequences is a first length; and
performing channel estimation on the at least two pilot symbols.

21. The method according to claim 20, wherein the first sequence pair is a Golay complementary sequence pair.

22. The method according to claim 20 or 21, further comprising:
sending first information, wherein the first information indicates the first length.

23. The method according to claim 22, wherein the first information comprises a factor set, and the factor set comprises at least one of a first factor, a second factor, and/or a third factor.

24. The method according to claim 23, wherein the first factor, the second factor, the third factor, and the first length satisfy the following relationship: $N = {2}^{a} {10}^{b} {26}^{c} ,$ wherein N is the first length, a is the first factor, b is the second factor, c is the third factor, and a, b, and c are natural numbers.

25. The method according to any one of claims 22 to 24, wherein the first length is related to a transmission bandwidth of a first data symbol, and the first data symbol and the at least two pilot symbols are mapped to a same frequency domain resource.

26. The method according to claim 25, wherein the method further comprises:
determining, based on a correspondence between a transmission bandwidth, a parameter, and a length of a data symbol, a length corresponding to the transmission bandwidth of the first data symbol and a first parameter, and using the determined length as the first length, wherein the parameter comprises a roll-off factor and/or bandwidth extension, and the first parameter comprises a roll-off factor and/or a bandwidth extension factor used to generate the first data symbol.

27. The method according to claim 25, wherein the method further comprises:
determining the first length based on the transmission bandwidth of the first data symbol and a first parameter, wherein the first parameter comprises a roll-off factor and/or a bandwidth extension factor used to generate the first data symbol.

28. The method according to claim 27, wherein determining the first length based on the transmission bandwidth of the first data symbol and the first parameter comprises:
determining the first length based on the transmission bandwidth of the first data symbol, the roll-off factor used to generate the first data symbol, a first coefficient afa, and a second coefficient, wherein the second coefficient is 2^{a}10^{b}26^{c}, and a, b, and c are natural numbers; or
determining the first length based on the transmission bandwidth of the first data symbol, the bandwidth extension factor used to generate the first data symbol, a first coefficient afa, and a second coefficient, wherein the second coefficient is 2*^{a}*10*^{b}*26*^{c}*, and a, b, and *c* are natural numbers.

29. The method according to any one of claims 25 to 28, wherein the first length is N, and the transmission bandwidth of the first data symbol is M; and
N is equal to 2*^{a}*10*^{b}*26*^{c}*, N is a maximum integer less than or equal to M, and a, b, and c are natural numbers; or
N is equal to 2^{a}10^{b}, N is a maximum integer less than or equal to M, and a and b are natural numbers; or
N is equal to 2^{a}, N is a maximum integer less than or equal to M, and a is a natural number.

30. The method according to any one of claims 25 to 28, wherein the first length is N, and the transmission bandwidth of the first data symbol is M; and
N is equal to 2^{a}10^{b}26^{c}, N is a minimum integer greater than or equal to M, and a, b, and c are natural numbers; or
N is equal to 2^{a}10^{b}, N is a minimum integer greater than or equal to M, and a and b are natural numbers; or
N is equal to 2^{a}, N is a minimum integer greater than or equal to M, and a is a natural number.

31. A communication apparatus, comprising a module configured to perform the method according to any one of claims 1 to 19, or comprising a module configured to perform the method according to any one of claims 20 to 30.

32. A communication apparatus, comprising a processor and an interface circuit, wherein the interface circuit is electrically coupled to the processor, and the processor performs, using a logic circuit or by executing code instructions, the method according to any one of claims 1 to 19 or the method according to any one of claims 20 to 30.

33. A computer-readable storage medium, wherein the storage medium stores a computer program or instructions, and when the computer program or the instructions are run, the method according to any one of claims 1 to 19 is performed or the method according to any one of claims 20 to 30 is performed.

34. A computer program product, comprising instructions, wherein when the instructions are run on a computer, the method according to any one of claims 1 to 19 is performed or the method according to any one of claims 20 to 30 is performed.
